# EUROPÄISCHE PATENTSCHRIFT

(11) **EP 2 217 525 B1**
(45) Veröffentlichungstag und Bekanntmachung des Hinweises auf die Patenterteilung: **06.04.2016**
(21) Anmeldenummer: 08805248.5
(22) Anmeldetag: 13.10.2008
(51) Int. Cl.: B67C 3/00, B67C 3/28

(54) **VORRICHTUNG ZUM ABFÜLLEN VON GETRÄNKEN**
DEVICE FOR BOTTLING BEVERAGES
DISPOSITIF DE TRANSVASEMENT DE BOISSONS

(30) Priorität: 12.10.2007 DE 102007048934
(43) Veröffentlichungstag der Anmeldung: 18.08.2010
(73) Patentinhaber: Krones AG, 93073 Neutraubling (DE)
(72) Erfinder: PÖSCHL, Stefan, 93073 Neutraubling (DE); MEINZINGER, Rupert, 93073 Neutraubling (DE)
(74) Vertreter: Bittner, Bernhard
(86) Internationale Anmeldenummer: PCT/EP2008/063708
(87) Internationale Veröffentlichungsnummer: WO 2009/050140

(56) Entgegenhaltungen:
- WO-A1-93/03301
- DE-B- 1 214 565
- DE-C- 358 171
- US-A- 2 501 511
- US-A1- 2006 000 511

## Beschreibung

Die vorliegende Erfindung bezieht sich auf eine Vorrichtung zum Abfüllen von Getränken gemäß dem Oberbegriff des Anspruchs 1 bzw. 9, und wie aus der US 2, 501, 511 bekannt. Aus dem Stand der Technik ist eine Vielzahl von derartigen Vorrichtungen bekannt. Dabei wird ausgehend von einem Aufbewahrungsbehältnis, wie einem Ringkessel, ein abzufüllendes Getränk über eine Zuleitung und eine Einfülleinrichtung in die Getränke abgefüllt.

Aus der DE 103 43 281 A1 sind ein Verfahren und eine Vorrichtung zur Herstellung und Abfüllung von mit Sauerstoff angereicherten Flüssigkeiten bekannt. Diese Vorrichtung weist ein Füllorgan mit einem Flüssigkeitsventil auf, sowie eine mit Stickstoff gefüllte Kammer, wobei zwischen einem an das Füllorgan angesetzten Behälter und der mit Stickstoff gefüllten Kammer eine leitende Verbindung zum Spülen und/oder Vorspannen des Behältnisses mit Stickstoff herstellbar ist.

Die DE 201 20 014 U1 beschreibt einen Rotationsfüller zum Füllen von Flaschen. Dieser Rotationsfüller weist einen Rotor auf, der um eine vertikale Achse drehbar ist und an dem mehrere Füllventile angeordnet sind. Die Füllventile sind dabei mit einem Flüssigkeitsbehälter über Flüssigkeitsleitungen verbunden.

Die DE 600 06 002 T2 beschreibt einen Füllkopf mit durch eine einzige Vorrichtung regelbarem Durchfluss. Dabei ist in einem Abführventil ein in achsialer Richtung des Ventils verschiebbarer Ventilkörper vorgesehen. Mit Hilfe dieses Ventilkörpers wird ein Abfüllventil mit regelbarer Durchflussmenge erreicht, welche mit nur einer einzigen Betätigungsvorrichtung funktionieren kann.

Aus der DE 30 40 880 A1 ist ein Behälterfüllorgan mit einem Rückluftrohr bekannt, wobei in diesem Rückluftrohr eine durchgängige Flüssigkeitsstoßsperre vorgesehen ist. Dabei ist das Rückluftrohr direkt in dem Füllorgan angeordnet und die Flüssigkeitsstoßsperre dient dazu, um ein trockenes Vorspannen zum Befüllen der Behältnisse zu ermöglichen.

Aus der DE 101 29 155 A1 ist ein Füllorgan für Behälterfüllmaschinen bekannt. Dieses Füllorgan weist einen Auslauf für das Produkt auf, der durch ein Ventil mit einem Ventilsitz und einem beweglichen Ventilkörper schließbar ist. Dabei wird die Schließbewegung dieses Ventilkörpers zumindest in der Endphase durch eine Dämpfungseinrichtung verlangsamt. Auch hier ist das Ventil direkt innerhalb des Füllorgans angeordnet.

Üblicherweise werden die zu befüllenden Behältnisse mit einer bestimmten Strömungsgeschwindigkeit bzw. einer maximalen Strömungsgeschwindigkeit befüllt. Unter gewissen Umständen, beispielsweise falls die zu befüllenden Behältnisse platzen oder die Behältnisse nach dem Blasen einen Riss oder einen nicht optimal gekühlten Boden aufweisen, kann es jedoch zu überhöhten Fliesgeschwindigkeiten in dem Füllventil kommen. Beim Schließen des Ventils kommt es in Folge dieser überhöhten Fließgeschwindigkeit zu starken Druckschlägen, welche das Füllventil bzw. die Bauteile belasten und sogar zum Ausfall der bewegten Dichtungen führen können.

Der vorliegenden Erfindung liegt daher die Aufgabe zugrunde, eine Vorrichtung zum Befüllen von Behältnissen zu schaffen, welche stets eine Überlastung der Füllventile verhindert. Daneben sollte eine Vorrichtung zur Verfügung gestellt werden, welche einen Wechsel des Füllventils während der Produktion erlaubt, ohne dass hierzu ein entsprechender Ringkessel geleert werden muss.

Dies wird auch durch eine Vorrichtung nach Anspruch 1 erreicht. Vorteilhafte Ausführungsformen und Weiterbildungen sind Gegenstand der Unteransprüche. Eine erfindungsgemäße Vorrichtung zum Befüllen von Behältnissen und insbesondere zum Befüllen von Behältnissen mit Getränken weist ein Aufbewahrungsbehältnis auf, in welchem eine in die Behältnisse abzufüllende Flüssigkeit aufnehmbar ist. Weiterhin ist eine Einfülleinrichtung vorgesehen, welche die Flüssigkeit in die Behältnisse einfüllt sowie eine Transportleitung, mit der die Flüssigkeit von dem Aufbewahrungsbehältnis zu der Einfülleinrichtung transportiert wird. Weiterhin ist in der Transportleitung zwischen dem Aufbewahrungsbehältnis und der Einfülleinrichtung eine Ventileinrichtung angeordnet, die in Abhängigkeit von einer Strömungsgeschwindigkeit der Flüssigkeit innerhalb der Transportleitung selbsttätig zwischen einem geöffneten und einem geschlossenen Zustand wechselt.

Bei dem Aufbewahrungsbehältnis handelt es sich insbesondere aber nicht ausschließlich um einen Ringkessel, in dem das abzufüllende Getränk angeordnet ist. Bei der Einfülleinrichtung handelt es sich insbesondere um eine ein Füllventil aufweisende Baugruppe, die zumindest teilweise in die zu befüllenden Behältnisse hineinragen kann, aber nicht zwingend muss. Durch die erfindungsgemäße Ventileinrichtung werden Druckschläge von der Einfülleinrichtung ferngehalten. Vorzugsweise handelt es sich bei der Ventileinrichtung um ein Rückschlagventil. Vorzugsweise ist die Ventileinrichtung derart gestaltet, dass sie bei Überschreiten einer bestimmten Strömungsgeschwindigkeit der Flüssigkeit von einem geöffneten Zustand in einen geschlossenen Zustand übergeht. In diesem Falle wird verhindert, dass die Komponenten der Einfülleinrichtung überlastet werden.

Bei einer vorteilhaften Ausführungsform weist die Vorrichtung eine Durchflussmesseinrichtung auf, und die Ventileinrichtung ist zwischen der Durchflussmesseinrichtung und der Einfülleinrichtung angeordnet. Bei einer erfindungsgemäßen Ausführungsform weist die Ventileinrichtung einen im Inneren der Transportleitung angeordneten Ventilkörper aus einem magnetischen Material sowie einen außerhalb der Transportleitung angeordneten Magneten auf.

Dabei wird dieser magnetische Ventilkörper durch den Magneten an einer bestimmten Position gehalten und von der Flüssigkeit umströmt, sodass die Ventileinrichtung in dieser Position geöffnet ist. Übersteigt die Strömungsgeschwindigkeit einen bestimmten Wert, wird der Ventilkörper aus seiner Nulllage gerissen und schließt bevorzugt eine Öffnung der Rohrleitung. Auf diese Weise wird ein Druckschlag auf die Einfülleinrichtung verhindert. Bevorzugt ist der Abstand zwischen dem Magneten und der Transportleitung veränderbar. Auf diese Weise kann die Grenzgeschwindigkeit, bei der es zu einem Schließen des Ventils kommt, verändert werden. Auch der Abstand zwischen Magnet und Kugel, die Wandstärke des Gehäuses kann variieren um die Auslösekraft zu verändern.

Die Verwendung einer derartigen Kombination aus einem Magneten und einem magnetischen Füllkörper ist vorteilhaft, da ein Magnet im Gegensatz zu beispielsweise einer Feder seine Maximalkraft in der Nulllage des Ventilkörpers hat. Falls also der Strömungswiderstand des Ventilkörpers die Haltekraft des Magneten überschreitet, löst sich der Ventilkörper sofort und schließt das Ventil. Bei der Verwendung einer Feder würde sich der Ventilkörper je nach der Strömungsgeschwindigkeit bewegen und auf diese Weise wäre eine Konstruktion, die keinerlei Drosselwirkung erzeugt, wesentlich erschwert.

Weiterhin bietet die Verwendung des magnetischen Körpers im Inneren der Transportleitung kombiniert mit dem Magneten außerhalb der Transportleitung einen besonders hygienischen Aufbau eines Rückschlagventils. Der Magnet ist bevorzugt ein gekapselter Magnet. Aufgrund dieser Vorzüge ist auch eine Anwendung allgemein in Produktleitungen mit hohen Anforderungen an die Sauberkeit und Reinigbarkeit, wie z. B. für Lebensmittel, pharmazeutische Produkte oder dgl. in Betracht zu ziehen.

Bei einer weiteren vorteilhaften Ausführungsform weist die Ventileinrichtung wenigstens abschnittsweise einen größeren Innenquerschnitt auf als die Transportleitung. Dies bedeutet, dass sich der Ventilkörper im Inneren der Ventileinrichtung in bestimmten Grenzen bewegen kann und sich damit gegenüber dem Magneten verschieben kann.

Vorzugsweise ist der Querschnitt des Ventilkörpers größer als der Innenquerschnitt des sich an den Ventilkörper anschließenden Abschnitts der Transportleitung. Besonders bevorzugt ist der maximale Durchmesser des Ventilkörpers größer als der maximale Innenquerschnitt der Transportleitung. Auf diese Weise kann der Ventilkörper die Transportleitung weitgehend verschließen. Bei einer weiteren vorteilhaften Ausführungsform ist der Ventilkörper eine Kugel. Die Verwendung einer Kugel hat den Vorteil, dass nicht auf deren genaue geometrische Lage bzw. auf deren Ausrichtung innerhalb der Ventileinrichtung geachtet werden muss.

Bei einer weiteren vorteilhaften Ausführungsform ist der Magnet unterhalb der Transportleitung angeordnet. Auf diese Weise wird erreicht, dass in einem Ruhezustand der Ventileinrichtung der Ventilkörper auch durch die Schwerkraft in Richtung des Magneten bewegt wird.

Bei einer erfindungsgemäßen Ausführungsform weist die Vorrichtung eine Bypassleitung auf, welche die Ventileinrichtung überbrückt. Dies bedeutet, dass beispielsweise von der Transportleitung stromaufwärts bezüglich der Ventileinrichtung die Bypassleitung abgezweigt wird und stromabwärts bezüglich der Ventileinrichtung wieder in die Transportleitung mündet. Generell muss, um die Kugel aus dem Sitz zu bekommen, d. h. um die geschlossene Stellung der Ventileinrichtung wieder aufzuheben, auf der Ventilseite und der Kesselseite wieder Gleichdruck erzeugt werden. Dies geschieht durch ein Vorspannen der nächsten Flasche bzw. des nächsten Behältnisses und dem Öffnen des Ventilkegels. Eventuell muss zum Öffnen des Ventils die folgende Flasche angefüllt werden. Die hier beschriebene Bypassleitung dient dazu, um den Druckausgleich überflüssig zu machen, da in diesem Fall der Ventilkörper die Transportleitung nicht vollständig abdichten kann. Es wäre jedoch auch möglich, die Bypassleitung vollständig im Inneren der Transportleitung vorzusehen. So könnte beispielsweise der Bereich der Transportleitung, der durch die Kugel abgedeckt werden soll, nicht exakt kreisförmig sondern hiervon abweichend ausgeführt werden. In diesem Falle wird selbst bei einer Abdeckung der Kugel nicht der gesamte Querschnitt der Rohrleitung abgedeckt.

Auch wäre es möglich, die Kugel selbst nicht mit einer glatten Oberfläche auszuführen sondern Unebenheiten wie Riffelungen vorzusehen, so dass die Flüssigkeit bei geschlossenem Ventil geringfügig in die Transportleitung gelangen kann.

Damit weist bei einer bevorzugten Ausführungsform derjenige Bereich der Transportleitung einen von dem Außenquerschnitt des Ventilkörpers abweichenden Innenquerschnitt auf.

Vorzugsweise weist die Bypassleitung einen geringeren Strömungsquerschnitt auf als die Ventileinrichtung in einem geöffneten Zustand. Auf diese Weise wird erreicht, dass die Strömungsgeschwindigkeit einen vorgegebenen Maximalwert nicht überschreitet und damit bei geschlossener Ventileinrichtung keine zu hohe Belastung der Einfülleinrichtung möglich ist.

Bevorzugte Ausführungsformen und Weiterbildungen ergeben sich aus den beigefügten Zeichnungen:

Darin zeigen:
- Fig. 1: eine erfindungsgemäße Vorrichtung wobei hier die Ventileinrichtung ein geschlossener Zustand ist; und
- Fig. 2: eine Detaildarstellung der erfindungsgemäßen Ventileinrichtung.

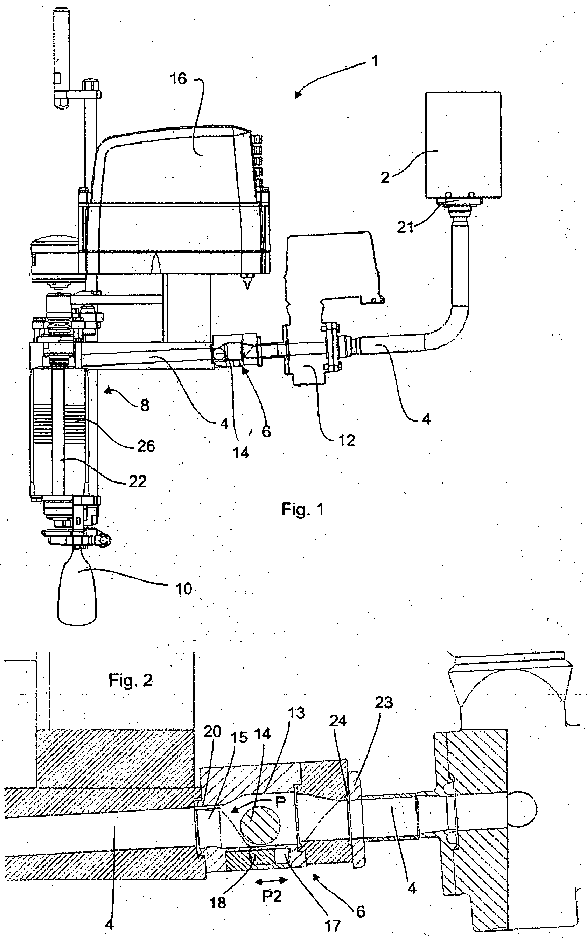

Fig. 1 zeigt eine Gesamtdarstellung einer erfindungsgemäßen Vorrichtung zum Befüllen von Behältnissen. Dabei bezieht sich das Bezugszeichen 2 auf ein (nur schematisch dargestelltes) Aufbewahrungsbehältnis, von welchem aus über eine Transportleitung 4 das Medium bzw. das Getränk in die (nicht gezeigten) Behältnisse abgefüllt wird. Das Bezugszeichen 22 bezieht sich auf eine Zuführleitung, über die dem Behältnis 10 ein gasförmiges Medium zugeführt wird, wie beispielsweise Kohlendioxid oder Stickstoff. Das abzufüllende Getränk wird um diese Luftleitung 22 herumgeleitet. Zu diesem Zweck ist eine nur schematisch dargestellte Balgdichtung 26 vorgesehen, welche die Zufuhr des Getränks in die Behältnisse steuert.

Im Fall von Störungen, beispielsweise beim Platzen von Flaschen, kommt es dazu, dass das abzufüllende Getränk mit hohem Druck durch diese Ventileinrichtung 24 strömt und diese gegebenenfalls zerstört.

Um derartige Zerstörungen zu vermeiden, ist innerhalb der Transportleitung 4 eine Ventileinrichtung 6 vorgesehen, die als Rückschlagventil ausgeführt ist. Das Bezugszeichen 12 bezieht sich auf einen Durchflussmesser und das Bezugszeichen 16 in seiner Gesamtheit auf eine Zuführeinheit für ein gasförmiges Medium. Dabei wird über eine Vielzahl von Ventilen und Ventilwegen der Abfüllvorgang für das Getränk gesteuert. So kann beispielsweise über pneumatische Mittel der eigentliche Abfüllvorgang in Gang gesetzt werden und auch das Behältnis 10 mit Kohlendioxid beaufschlagt werden. Bei der in Fig. 1 gezeigten Darstellung befindet sich die Vorrichtung in einem Zustand, in dem die Ventileinrichtung 6 in einer geschlossenen Position ist, d. h. keinen oder nur einen geringen Durchfluss des Getränks durch die Transportleitung ermöglicht. Das Bezugszeichen 21 kennzeichnet einen Anschluss der Transportleitung an dem Aufbewahrungsbehältnis 2.

Fig. 2 zeigt eine Detaildarstellung der Ventileinrichtung 6, wobei hier die Ventileinrichtung in einem geöffneten Zustand ist.

Der Ventilkörper 14, bei dem es sich um eine Kugel handelt, ist hier von einem Sitz 15 der Ventileinrichtung beabstandet sodass das Getränk in Richtung des Pfeils P an dem Ventilkörper 14 vorbei und damit durch die Ventileinrichtung 6 gelangen kann. Unterhalb der Ventileinrichtung genauer, unterhalb der Transportleitung 4 ist ein Magnet 18 vorgesehen, der im normalen Arbeitsbetrieb die Kugel 14 in der geöffneten Position hält. Dabei ist es auch möglich, die Lage des Magneten 18 innerhalb einer Ausnehmung entlang des Pfeils P2 zu verschieben. Auf diese Weise kann eingestellt werden, bei welchen Strömungsgeschwindigkeiten die Ventileinrichtung 6 wieder von einem geschlossenen Zustand in einen geöffneten Zustand übergehen kann. Falls sich die Kugel 14 im Sitz 15 befindet und der Magnet 18 in der in Fig. 2 gezeigten Stellung angeordnet ist, wird die Kugel schneller wieder aus dem Sitz 15 herausgezogen, als wenn der Magnet innerhalb der Ausnehmenung auf der rechten Seite angeordnet wäre.

In dem geöffneten Zustand umströmt die Flüssigkeit, d.h. das Getränk die Kugel. Übersteigt die Strömungsgeschwindigkeit einen bestimmten Wert, wird die Kugel aus ihrer Nullage gerissen und schließt die Öffnung auf der linken Seite.

Das Bezugszeichen 24 bezieht sich auf eine Dichtungseinrichtung, um die Ventileinrichtung 6 gegenüber der Transporteinrichtung 4 bzw. einen Flansch 23 abzudichten. Das Bezugszeichen 13 bezieht sich auf einen erweiteten Bereich der Ventileinrichtung 6, innerhalb dessen sich die Kugel 14 bewegen kann. Dabei ist die Ventileinrichtung derart gestaltet, dass deren unterer Bereich, an dem auch der Magnet 18 angeordnet ist, im Wesentlichen geradlinig verläuft und der obere Bereich 13 gekrümmt ist, um den höheren Querschnitt zu ermöglichen.

Damit wird der Ventilkörper bzw. die Kugel hier mit Hilfe der Magnetkupplung in der Transportleitung gehalten, wodurch ein hygienisches Design ermöglicht wird, welches insbesondere für aseptische Anwendungen besonders vorteilhaft ist. Der maximale Durchfluss wird mit dieser Ventileinrichtung begrenzt und auch ein einfaches Öffnen des Ventils durch Druckausgleich ist möglich.

Das Bezugszeichen 20 zeigt grob schematisch eine Bypassleitung, durch die die Flüssigkeit auch dann strömen kann, wenn die Ventileinrichtung geschlossen ist. Es wären hier jedoch auch andere Ausführungsformen dieser Bypassleitung möglich. So könnte z.B. der Sitz 24 mit einem nicht genau kreisförmigen Querschnitt ausgeführt sein.

Die beschriebene Ventilkonstruktion ist auch in Anwendungsfällen einsetzbar, wo kein Aufbewahrungsbehältnis vorgesehen ist und das Produkt bzw. die Flüssigkeit beispielsweise von einem Drehverteiler kommend direkt einer Einfülleinrichtung zugeführt wird, oder allgemein in Rohrleitungen, die z. B. einem Drehverteiler einer Füllmaschine vorgelagert sind.

## Patentansprüche

1. Vorrichtung (1) zum Befüllen von Behältnissen mit vorzugsweise einem Aufbewahrungsbehältnis (2), in welchem eine in die Behältnisse (10) abzufüllende Flüssigkeit aufnehmbar ist, mit einer Einfülleinrichtung (8), welche die Flüssigkeit in die Behältnisse (10) einfüllt und mit einer Transportleitung (4), mit der die Flüssigkeit vorzugsweise von dem Aufbewahrungsbehältnis (2) zu der Einfülleinrichtung (8) transportiert wird, wobei in der Transportleitung (4) vorzugsweise zwischen dem Aufbewahrungsbehältnis (2) und der Einfülleinrichtung (8) eine Ventileinrichtung (6) angeordnet ist, welche in Abhängigkeit von einer Strömungsgeschwindigkeit der Flüssigkeit innerhalb der Transportleitung (4) selbsttätig zwischen einem geöffneten und einem geschlossenen Zustand wechselt,
**dadurch gekennzeichnet, dass**
die Ventileinrichtung (6) einen im Inneren der Transportleitung (4) angeordneten Ventilkörper (14) aus einem magnetischen Material sowie einen außerhalb der Transportleitung (4) angeordneten Magneten (18) aufweist, und dass die Vorrichtung (1)eine Bypassleitung (20), welche die Ventileinrichtung (6) überbrückt, aufweist, sodass ein einfaches Öffnen der Ventileinrichtung (6) durch Druckausgleich möglich ist.

2. Vorrichtung (1) nach Anspruch 1,
**dadurch gekennzeichnet, dass**
die Ventileinrichtung (6) derart gestaltet ist, dass sie bei Überschreiten einer bestimmten Strömungsgeschwindigkeit von einem geöffneten Zustand in einen geschlossenen Zustand übergeht.

3. Vorrichtung (1) nach wenigstens einem der vorangegangenen Ansprüche,**dadurch gekennzeichnet, d ass**
die Vorrichtung (1) eine Durchflussmesseinrichtung (12) aufweist und die die Ventileinrichtung zwischen der Durchflussmesseinrichtung (12) und der Einfülleinrichtung (8) angeordnet ist.

4. Vorrichtung (1) nach wenigstens einem der vorangegangenen Ansprüche,
**dadurch gekennzeichnet, dass**
die Ventileinrichtung (6) wenigstens abschnittsweise einen größeren Innenquerschnitt aufweist als die Transportleitung (4).

5. Vorrichtung (1) nach -Anspruch 4,
**dadurch gekennzeichnet, dass**
ein Querschnitt des Ventilkörpers (14) größer ist als der Innenquerschnitt des sich an den Ventilkörper (14) anschließenden Abschnitts der Transportleitung (4).

6. Vorrichtung (1) nach wenigstens einem der vorangegangenen Ansprüche 4 - 5,
**dadurch gekennzeichnet, dass**
der Ventilkörper (14) eine Kugel (14) ist.

7. Vorrichtung (1) nach wenigstens einem der vorangegangenen Ansprüche 4 - 6,
**dadurch gekennzeichnet, dass**
der Magnet (18) unterhalb der Transportleitung (4) angeordnet ist.

8. Vorrichtung (1) nach zumindest einem der vorhergehenden Ansprüche,
**dadurch gekennzeichnet, dass**
die Bypassleitung (20) einen geringeren Strömungsquerschnitt aufweist als die Ventileinrichtung (6) in einem geöffneten Zustand.

9. Vorrichtung mit wenigstens einer Transportleitung (4) mit hoher Anforderung an die Sauberkeit und Reinigbarkeit und zum Durchleiten von Fluiden und/oder Produkten wie Getränke, Lebensmittel, aseptische Produkte jeglicher Art oder Pharmazeutika,
wobei
in der Transportleitung (4) eine Ventileinrichtung (6), welche in Abhängigkeit von einer Strömungsgeschwindigkeit des Fluids innerhalb der Transportleitung (4) selbsttätig zwischen einem geöffnetem und einem geschlossenen Zustand wechselt, angeordnet ist,
**dadurch gekennzeichnet, dass**
die Ventileinrichtung (6) einen im Inneren der Transportleitung (4) angeordneten Ventilkörper (14) aus einem magnetischen Material sowie einen außerhalb der Transportleitung (4) angeordneten Magneten (18) aufweist, und dass die Vorrichtung
eine Bypassleitung (20), welche die Ventileinrichtung (6) überbrückt, aufweist, sodass ein einfaches Öffnen der Ventileinrichtung (6) durch Druckausgleich möglich ist.

## Claims

1. Device (1) for filling containers, comprising preferably one storage container (2) in which a fluid that is to be bottled in the containers (10) can be accommodated, comprising a filling device (8) which fills the fluid into the containers (10), and comprising a transport line (4) by means of which the fluid is transported preferably from the storage container (2) to the filling device (8), wherein a valve device (6) is arranged in the transport line (4) preferably between the storage container (2) and the filling device (8), which valve device automatically switches between an open and a closed state depending on a flow rate of the fluid within the transport line (4), **characterised in that** the valve device (6) comprises a valve body (14) formed by a magnetic material arranged inside the transport line (4) and a magnet (18) which is arranged outside the transport line (4) and that the apparatus (1) comprises a bypass line (20) which bridges the valve device (6) so that a simple opening of the valve device (6) is possible by means of pressure compensation.

2. Device (1) according to claim 1, **characterised in that** the valve device (6) is configured in such a way that it moves from an open state to a closed state when a certain flow rate is exceeded.

3. Device (1) according to at least one of the preceding claims, **characterised in that** the device (1) comprises a flow measuring device (12) and the the valve device is arranged between the flow measuring device (12) and the filling device (8).

4. Device (1) according to at least one of the preceding claims, **characterised in that** the valve device (6) has at least in some sections a larger internal cross-section than the transport line (4).

5. Device (1) according to claim 4, **characterised in that** a cross-section of the valve body (14) is larger than the internal cross-section of the portion of the transport line (4) adjacent to the valve body (14).

6. Device (1) according to at least one of the preceding claims 4 - 5, **characterised in that** the valve body (14) is a ball (14).

7. Device (1) according to at least one of the preceding claims 4 - 6, **characterised in that** the magnet (18) is arranged below the transport line (4).

8. Device (1) according to at least one of the preceding claims, **characterised in that** the bypass line (20) has a smaller flow cross-section than the valve device (6) in an open state.

9. Device comprising at least one transport line (4) with a high demand for cleanness and purification and for the passage of fluids and/or products such as beverages, foodstuffs, aseptic products of any type or pharmaceuticals, wherein a valve device (6) is arranged in the transport line (4), which valve device automatically switches between an open and a closed state depending on a flow rate of the fluid within the transport line (4), **characterised in that** the valve device (6) comprises a valve body (14) formed by a magnetic material arranged inside the transport line (4) and a magnet (18) arranged outside the transport line (4) and that the apparatus comprises a bypass line (20) which bridges the valve device (6) so that a simple opening of the valve device (6) is possible by means of pressure compensation.

## Revendications

1. Dispositif (1) de remplissage de récipients, qui comporte de préférence un récipient de stockage (2) pouvant contenir un liquide à transvaser dans les récipients (10), un dispositif de remplissage (8) qui introduit le liquide dans les récipients (10) et une conduite de transport (4) qui transporte le liquide de préférence du récipient de stockage (2) jusqu'au dispositif de remplissage (8), un ensemble soupape (6), lequel bascule automatiquement entre un état ouvert et un état fermé en fonction d'une vitesse d'écoulement du liquide à l'intérieur de la conduite de transport (4), étant disposé dans la conduite de transport (4) de préférence entre le récipient de stockage (2) et le dispositif de remplissage (8),
**caractérisé en ce que**
l'ensemble soupape (6) comprend un corps de soupape (14) fait d'un matériau magnétique et disposé à l'intérieur de la conduite de transport (4), ainsi qu'un aimant (18) disposé à l'extérieur de la conduite de transport (4), et **en ce que** le dispositif (1) comprend une conduite de dérivation (20), laquelle contourne l'ensemble soupape (6), de sorte que l'ensemble soupape (6) peut s'ouvrir facilement à la suite d'une compensation de pression.

2. Dispositif (1) selon la revendication 1,
**caractérisé en ce que**
l'ensemble soupape (6) est conçu de telle manière que, lorsqu'une vitesse d'écoulement définie est dépassée, il passe d'un état ouvert à un état fermé.

3. Dispositif (1) selon au moins l'une des revendications précédentes, **caractérisé en ce que**
le dispositif (1) comprend un système de mesure du débit (12) et l'ensemble soupape est disposé entre le système de mesure du débit (12) et le dispositif de remplissage (8).

4. Dispositif (1) selon au moins l'une des revendications précédentes,
**caractérisé en ce que**
l'ensemble soupape (6) présente au moins en sections une section transversale intérieure supérieure à celle de la conduite de transport (4).

5. Dispositif (1) selon la revendication 4,
**caractérisé en ce qu'**une section transversale du corps de soupape (14) est supérieure à la section transversale intérieure de la partie de la conduite de transport (4) adjacente au corps de soupape (14).

6. Dispositif (1) selon l'une quelconque des revendications précédentes 4 à 5,
**caractérisé en ce que**
le corps de soupape (14) est une sphère (14).

7. Dispositif (1) selon au moins l'une des revendications précédentes 4 à 6,
**caractérisé en ce que**
l'aimant (18) est disposé au-dessous de la conduite de transport (4).

8. Dispositif (1) selon au moins l'une des revendications précédentes,
**caractérisé en ce que**
la conduite de dérivation (20) présente une section d'écoulement inférieure à celle de l'ensemble soupape (6) une fois celui-ci ouvert.

9. Dispositif comprenant au moins une conduite de transport (4) répondant aux plus grandes exigences de propreté et d'aptitude au nettoyage et destinée à faire passer des fluides et/ou des produits tels que des boissons, des aliments, toutes sortes de produits aseptiques ou des produits pharmaceutiques,
un ensemble soupape (6), lequel bascule automatiquement entre un état ouvert et un état fermé en fonction d'une vitesse d'écoulement du liquide à l'intérieur de la conduite de transport (4), étant disposé dans la conduit de transport (4), **caractérisé en ce que** l'ensemble soupape (6) comprend un corps de soupape (14) disposé à l'intérieur de la conduite de transport (4) et fait d'un matériau magnétique, et un aimant (18) disposé à l'extérieur de la conduite de transport (4), et **en ce que** le dispositif comprend une conduite de dérivation (20), laquelle contourne l'ensemble soupape (6), de sorte que l'ensemble soupape (6) peut s'ouvrir facilement à la suite d'une compensation de pression.
